# FASCICULE DE BREVET EUROPEEN

(11) **EP 1 556 870 B1**
(45) Date de publication et mention de la délivrance du brevet: **29.11.2017**
(21) Numéro de dépôt: 03775483.5
(22) Date de dépôt: 13.10.2003
(51) Int. Cl.: G21C 17/00, G21D 3/00

(54) **PROCEDE DE DETERMINATION D'UNE VALEUR LIMITE D'UN PARAMETRE DE FONCTIONNEMENT D'UN REACTEUR NUCLEAIRE, SYSTEME, PROGRAMME D'ORDINATEUR ET SUPPORT CORRESPONDANTS**
VERFAHREN ZUM BESTIMMEN EINES GRENZWERTES EINES BETRIEBSPARAMETERS EINES KERNREAKTORS, ENTSPRECHENDE VORRICHTUNG, RECHNERPROGRAMM UND TRÄGER
METHOD FOR DETERMINING A THRESHOLD VALUE OF A NUCLEAR REACTOR OPERATING PARAMETER, CORRESPONDING SYSTEM, COMPUTER PROGRAMME AND SUPPORT

(30) Priorité: 21.10.2002 FR 0213093
(43) Date de publication de la demande: 27.07.2005
(60) Demande divisionnaire: 16152785.8
(73) Titulaire: AREVA NP, 92400 Courbevoie (FR)
(72) Inventeur: MAHE, Patrice, 84420 Piolenc (FR); ROYERE, Christian, 92140 Clamart (FR)
(74) Mandataire: Lavoix
(86) Numéro de dépôt international: PCT/FR2003/003016
(87) Numéro de publication internationale: WO 2004/038730

(56) Documents cités:
- EP-A- 0 405 863
- EP-A- 1 113 455
- EP-A- 1 221 701
- US-A- 4 330 367
- US-A- 5 912 933

## Description

La présente invention concerne un procédé de détermination d'au moins une valeur limite d'au moins un premier paramètre de fonctionnement d'un réacteur nucléaire comprenant un coeur dans lequel des assemblages combustibles sont chargés, les assemblages combustibles comprenant des crayons combustibles comportant chacun des pastilles de combustible nucléaire et une gaine entourant les pastilles.

L'invention s'applique, par exemple, aux réacteurs à eau pressurisée.

Un grand nombre de ces réacteurs sont actuellement exploités dans le monde.

Il peut être utile, notamment dans des pays comme la France où 80% de l'électricité est produite par des réacteurs nucléaires, que la puissance globale fournie par les réacteurs varie afin de s'adapter aux besoins du réseau électrique qu'ils alimentent.

En particulier, il est souhaitable de pouvoir faire fonctionner les réacteurs à puissance réduite pendant une longue période où la demande du réseau est faible, avant de revenir si nécessaire à puissance nominale.

Pour autant, une telle exploitation de chaque réacteur, qui permettrait de mieux exploiter ses capacités, ne devrait pas induire de problème de sûreté.

Un but de l'invention est de résoudre ce problème en fournissant un procédé permettant de déterminer au moins une valeur limite d'un paramètre de fonctionnement d'un réacteur nucléaire, permettant de mieux exploiter les capacités du réacteur, tout en conservant un fonctionnement sûr du réacteur.

A cet effet, l'invention a pour objet un procédé de détermination selon la revendication 1.

Selon des modes particuliers de réalisation, le procédé peut comprendre l'une ou plusieurs des caractéristiques des revendications dépendantes 2 à 16.

L'invention a en outre pour objet un système de détermination selon les revendications 17 et 18.

L'invention a en outre pour objet un programme d'ordinateur selon la revendication 19.

L'invention a en outre pour objet un support selon la revendication 20.

L'invention sera mieux comprise à la lecture de la description qui va suivre, donnée uniquement à titre d'exemple, et faite en se référant aux dessins annexés, sur lesquels
- la figure 1 est une vue schématique illustrant un réacteur nucléaire à eau pressurisée,
- la figure 2 est une vue schématique latérale d'un assemblage combustible du coeur du réacteur de la figure 1,
- la figure 3 est une vue schématique en coupe longitudinale d'un crayon combustible de l'assemblage de la figure 2,
- la figure 4 est un schéma bloc d'un système de détermination de valeurs limites de paramètres de fonctionnement du réacteur de la figure 1,
- la figure 5 est un organigramme illustrant des étapes successives du procédé mis en oeuvre par le système de la figure 4,
- la figure 6 est une courbe illustrant des essais de rampe de puissance effectués sur des crayons combustibles,
- la figure 7 est un graphique illustrant les contraintes maximales atteintes dans les gaines de crayons combustibles lors d'essais de rampe de puissance,
- la figure 8 est un diagramme représentant des domaines de fonctionnement du réacteur de la figure 1,
- la figure 9 est une courbe illustrant la simulation d'un transitoire de puissance lorsque le réacteur de la figure 1 est en fonctionnement prolongé à puissance intermédiaire,
- la figure 10 est une vue analogue à la figure 9, le transitoire étant simulé après un fonctionnement prolongé à puissance intermédiaire puis retour à un fonctionnement à puissance nominale, et
- la figure 11 est une courbe illustrant le fonctionnement du réacteur en suivi de réseau.

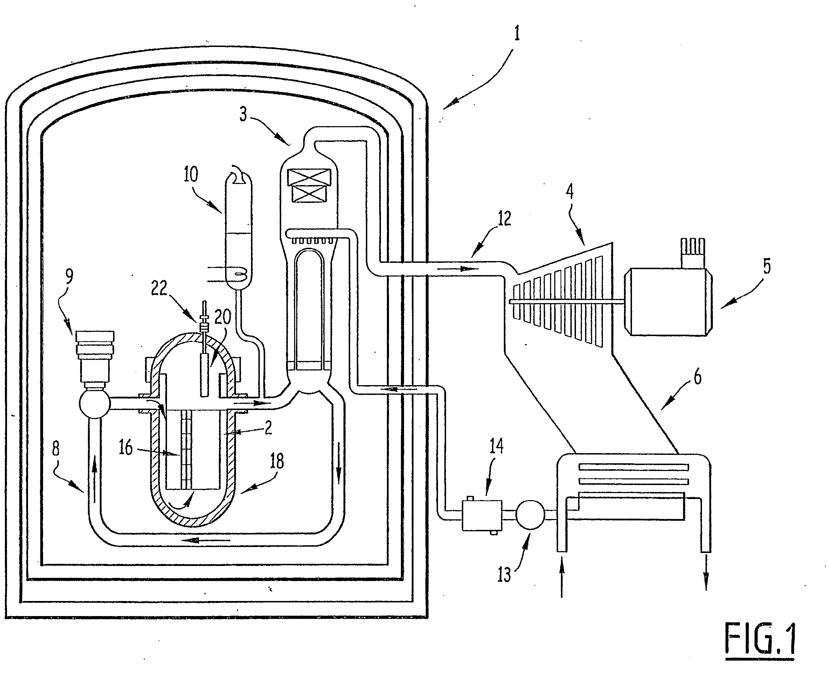

La figure 1 illustre schématiquement un réacteur nucléaire 1 à eau pressurisée qui comprend classiquement :
- un coeur 2,
- un générateur de vapeur 3,
- une turbine 4 couplée à un générateur 5 d'énergie électrique, et
- un condenseur 6.

Le réacteur 1 comprend un circuit primaire 8 équipé d'une pompe 9 et dans lequel circule de l'eau sous pression, selon le trajet matérialisé par les flèches sur la figure 1. Cette eau remonte notamment au travers du coeur 2 pour y être réchauffée en assurant la réfrigération du coeur 2.

Le circuit primaire 8 comprend en outre un pressuriseur 10 permettant de mettre sous pression l'eau circulant dans le circuit primaire 8.

L'eau du circuit primaire 8 alimente également le générateur de vapeur 3 où elle est refroidie en assurant la vaporisation d'eau circulant dans un circuit secondaire 12.

La vapeur produite par le générateur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le coeur 2 comprend des assemblages combustibles 16 qui sont chargés dans une cuve 18. Un seul assemblage 16 est représenté sur la figure 1, mais le coeur 2 comprend par exemple 157 assemblages 16.

Le réacteur 2 comprend des grappes de contrôle 20 qui sont disposées dans la cuve 18 au-dessus de certains assemblages 16. Une seule grappe 20 est représentée sur la figure 1, mais le coeur 2 peut comprendre par exemple environ 60 grappes 20.

Les grappes 20 peuvent être déplacées par des mécanismes 22 pour venir s'insérer dans les assemblages combustibles 16 qu'elles surplombent.

Classiquement, chaque grappe de contrôle 20 comprend des crayons de contrôle en un matériau absorbant les neutrons.

Ainsi, le déplacement vertical de chaque grappe 20 permet de régler la réactivité du réacteur 1 et autorise des variations de la puissance globale P fournie par le coeur 2 depuis la puissance nulle jusqu'à la puissance nominale PN, en fonction de l'enfoncement des grappes 20 dans les assemblages combustibles 16.

Certaines de ces grappes 20 sont destinées à assurer la régulation du fonctionnement du coeur 2, par exemple en puissance ou en température, et sont dénommées grappes de réglage. D'autres sont destinées à l'arrêt du réacteur 1 et sont dénommées grappes d'arrêt.

Les grappes 20 sont réunies en groupes en fonction de leur nature et de leur destination. Par exemple pour les réacteurs de type 900 MWe CPY, ces groupes sont dénommés groupes G1, G2, N1, N2, R, SA, SB, SC, SD...

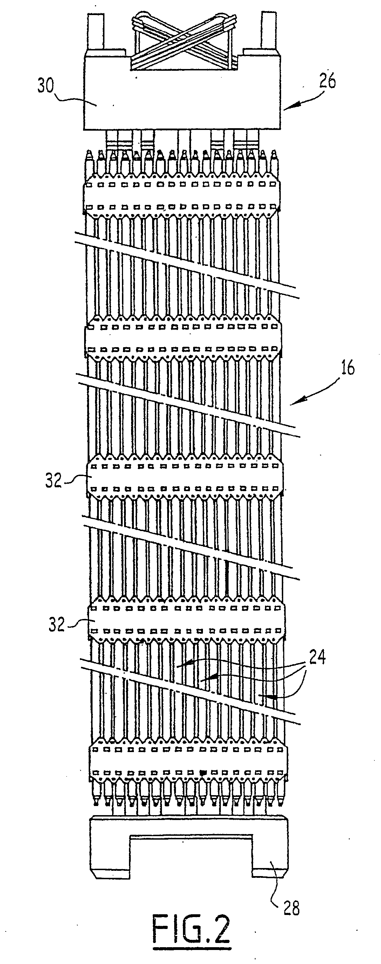

Comme illustré par la figure 2, chaque assemblage combustible 16 comprend de manière classique un réseau de crayons combustibles 24 et un squelette 26 de support des crayons 24.

Le squelette 26 comprenant classiquement un embout inférieur 28, un embout supérieur 30, des tubes guides reliant les deux embouts 26 et 28 et destinés à recevoir des crayons de contrôle des grappes 20, et des grilles entretoises 32.

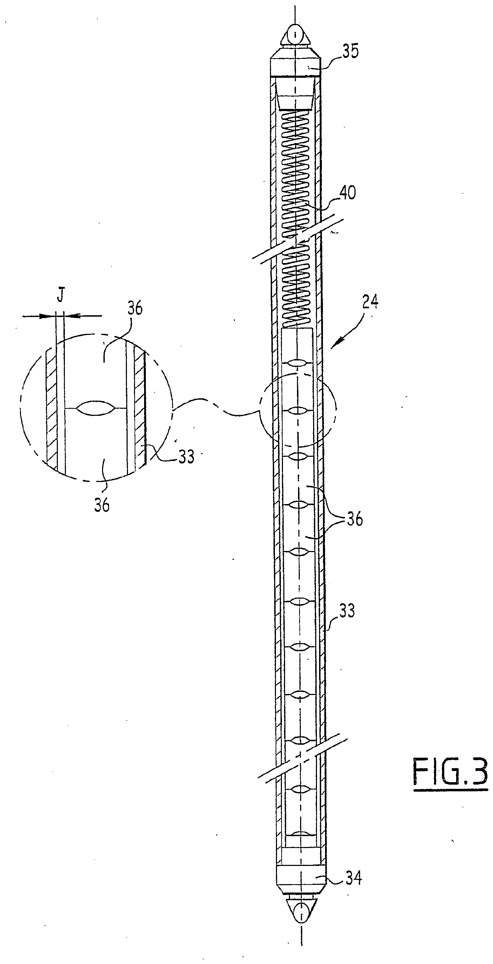

Comme illustré par la figure 3, chaque crayon combustible 24 comprend de manière classique, une gaine 33 sous forme d'un tube fermé à son extrémité inférieure par un bouchon inférieur 34 et à son extrémité supérieure par un bouchon supérieur 35. Le crayon 24 comprend une série de pastilles 36 empilées dans la gaine 33 et prenant appui contre le bouchon inférieur 34. Un ressort de maintien 40 est disposé dans le tronçon supérieur de la gaine 33 pour prendre appui sur le bouchon supérieur 35 et sur la pastille 36 supérieure.

Classiquement, les pastilles 36 sont en oxyde d'uranium et la gaine 33 en alliage de zirconium.

Sur la figure 3, qui correspond à un crayon combustible 24 issu de fabrication et avant d'irradiation, il existe un jeu radial J entre les pastilles 36 et la gaine 33. Cela est illustré plus particulièrement par la partie cerclée agrandie de la figure 3.

Lorsque le réacteur 1 va fonctionner, par exemple à sa puissance globale nominale PN, le combustible nucléaire des pastilles 36 va être, selon le terme employé dans la technique, conditionné.

Le conditionnement se caractérise essentiellement par la fermeture du jeu J entre les pastilles 36 et la gaine 33, due au fluage de la gaine 33 et au gonflement des pastilles 36.

Plus spécifiquement, on peut distinguer les étapes suivantes pour chaque pastille 36 :
1) Sous l'effet de la différence de pression entre l'extérieur (eau du circuit primaire 8) et l'intérieur du crayon 24, la gaine 33 se déforme progressivement par fluage radialement vers l'intérieur du crayon 24. Toutes choses égales par ailleurs, la vitesse de fluage de la gaine 33 est une caractéristique du matériau qui la constitue. Par ailleurs, les produits de fission, qui sont en majorité retenus dans la pastille 36, induisent un gonflement de la pastille 36. Durant cette phase, la sollicitation de la gaine 33 du point de vue des contraintes est uniquement le fait de la pression différentielle existant entre l'extérieur et l'intérieur du crayon 24. Les contraintes dans la gaine 33 sont des contraintes de compression (négatives par convention).
2) Le contact entre la pastille 36 et la gaine 33 s'amorce au bout d'un laps de temps qui dépend essentiellement des conditions locales d'irradiation (puissance flux neutronique, température...) et du matériau de la gaine 33. En réalité, le contact s'établit de façon progressive sur une période qui débute par un contact mou suivi par l'établissement d'un contact fort. La pression de contact de l'oxyde de la pastille 36 sur la face interne de la gaine 33 conduit à une inversion des contraintes dans la gaine 33 qui deviennent positives et tendent à solliciter la gaine en traction.
3) Le gonflement de la pastille 36 se poursuit et impose alors sa déformation à la gaine 33 vers l'extérieur. En régime permanent établi, cette expansion est suffisamment lente pour que la relaxation du matériau de la gaine 33 permette un équilibre des efforts dans la gaine 33. Une analyse montre que dans ces conditions le niveau des contraintes en traction est modéré (quelques dizaines de MPa) et ne présente pas de risque vis-à-vis de l'intégrité de la gaine 33.

S'il n'y a pas de risque de rupture de la gaine 33 en régime permanent du fait de l'équilibre thermomécanique dans la gaine 33 à des niveaux de contraintes assez faibles, un risque apparaît par contre dès que la puissance fournie par le crayon 24 varie fortement.

En effet, une augmentation de puissance engendre une augmentation de la température dans le crayon 24. Etant donnée la différence des caractéristiques mécaniques (coefficient de dilatation thermique, module d'Young) et la différence de température entre la pastille 36 en oxyde d'uranium et la gaine 33 en alliage de zirconium, la pastille 36 va se dilater davantage que la gaine 33 et imposer sa déformation à cette dernière.

Par ailleurs, la présence dans l'espace entre la gaine 33 et la pastille 36 de produits de fission corrosifs, tels que l'iode, crée les conditions de la corrosion sous contrainte. Ainsi, la déformation imposée par la pastille 36 à la gaine 33 lors d'un transitoire, ou variation, de puissance peut provoquer une rupture de la gaine 33.

Or, une telle rupture de la gaine 33 n'est pas admissible pour des raisons de sûreté puisqu'elle pourrait résulter en la libération de produits de fission dans le circuit primaire 8.

Des transitoires de puissance peuvent se produire lors d'un fonctionnement normal du réacteur 1, c'est-à-dire dans les situations dites de catégorie 1. En effet, des variations de puissance peuvent être nécessaires notamment pour s'adapter aux besoins en énergie électrique du réseau que le générateur 5 alimente. Des transitoires de puissance peuvent également se produire dans les situations accidentelles dites de catégorie 2, comme l'augmentation excessive de charge, le retrait incontrôlé de groupe(s) de grappes 20 en puissance, la dilution d'acide borique ou encore la chute de grappes 20 non détectée.

Pour garantir l'intégrité des crayons 24 vis-à-vis de l'interaction pastilles 36 - gaines 33, l'invention propose de déterminer des valeurs limites de paramètres de fonctionnement du réacteur 1 en prenant en compte cette interaction pastille - gaine.

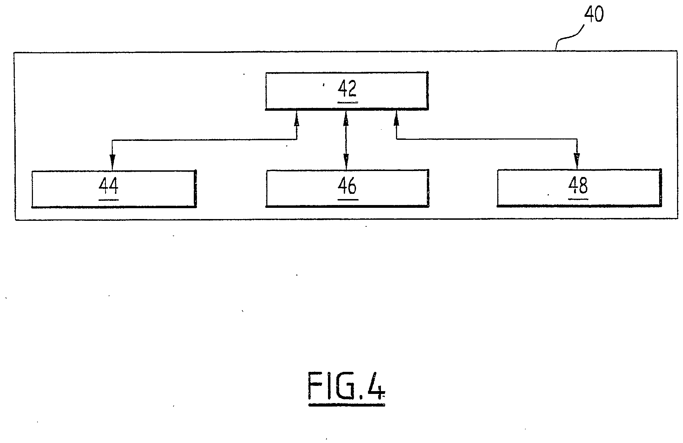

Pour cela, on peut utiliser, par exemple, un système informatique 40 telle que celui de la figure 4. Ce système 40 comprend par exemple une unité de traitement d'informations 42 comprenant un ou plusieurs processeur(s), des moyens 44 de stockage des données, des moyens 46 d'entrée/sortie et éventuellement des moyens 48 d'affichage.

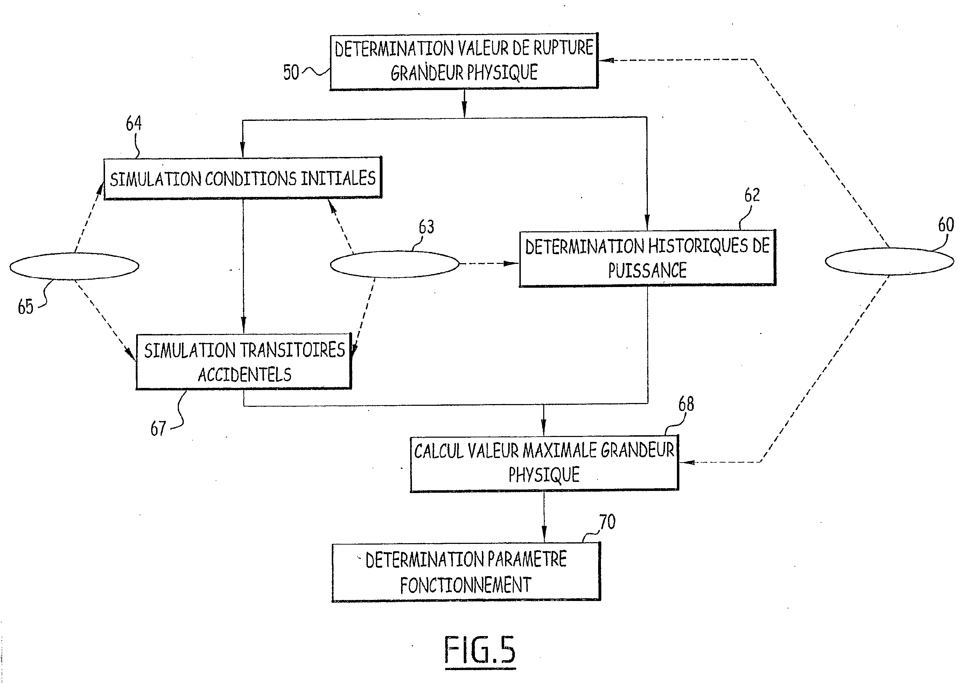

Le procédé de détermination des valeurs limites des paramètres de fonctionnement est illustré par l'organigramme de la figure 5.

Une première étape illustrée par le bloc 50 consiste à déterminer une valeur d'une grandeur physique pour laquelle une rupture d'une gaine 33 d'un crayon 24 intervient lors d'une augmentation de la puissance nucléaire fournie par le crayon 24.

La grandeur physique est par exemple la contrainte circonférentielle et normale σ₀ dans la gaine 33. Dans d'autres variantes, il peut s'agir d'une fonction de contrainte(s), par exemple de la différence entre σ_{θ} et la contrainte radiale et normale σᵣ ou de la densité d'énergie de déformation dans la gaine 33.

Pour déterminer la valeur de rupture, on peut soumettre un certain nombre de tronçons de crayons 24, par exemple pré-irradiés dans des réacteurs de puissance et correspondant donc à des niveaux d'épuisement différents, à des rampes ou augmentation brutale de puissance dans des réacteurs d'essais.

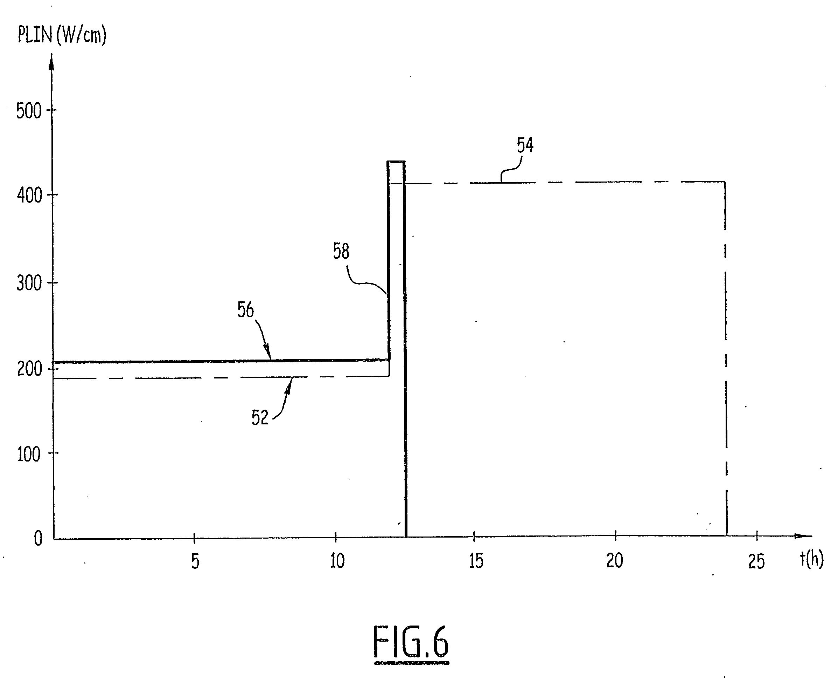

De telles rampes sont schématisées sur la figure 6 où la puissance linéique PLIN fournie par un tronçon de crayon 24 est portée en ordonnée et le temps est porté en abscisse.

La courbe 52 en trait mixte sur la figure 6 illustre une rampe de puissance subie par un tronçon de crayon 24 au cours de laquelle aucune rupture de la gaine 33 n'intervient.

La forte puissance fournie par le tronçon de crayon 24 à l'issue de la rampe est représentée par la partie 54 de la courbe 52. Cette forte puissance est maintenue pendant plusieurs heures.

La courbe 56 en trait plein illustre le cas d'un tronçon de crayon 24 pour lequel une rupture de la gaine 33 intervient. Dans ce cas, la rampe qui est schématisée par la partie 58 de la courbe 56 est interrompue immédiatement et la puissance PLIN ramenée rapidement à 0.

On calcule, pour chaque tronçon de crayon 24, la valeur maximale σ_{θMAX} atteinte par la grandeur physique σ_{θ} grâce à un logiciel qui est repéré par la référence 60 sur la figure 5 et qui est par exemple stocké dans les moyens 44 de stockage du système 40. Un tel logiciel 60 peut être un logiciel classique faisant intervenir les éléments finis pour modéliser le comportement thermomécanique du tronçon de crayon 24.

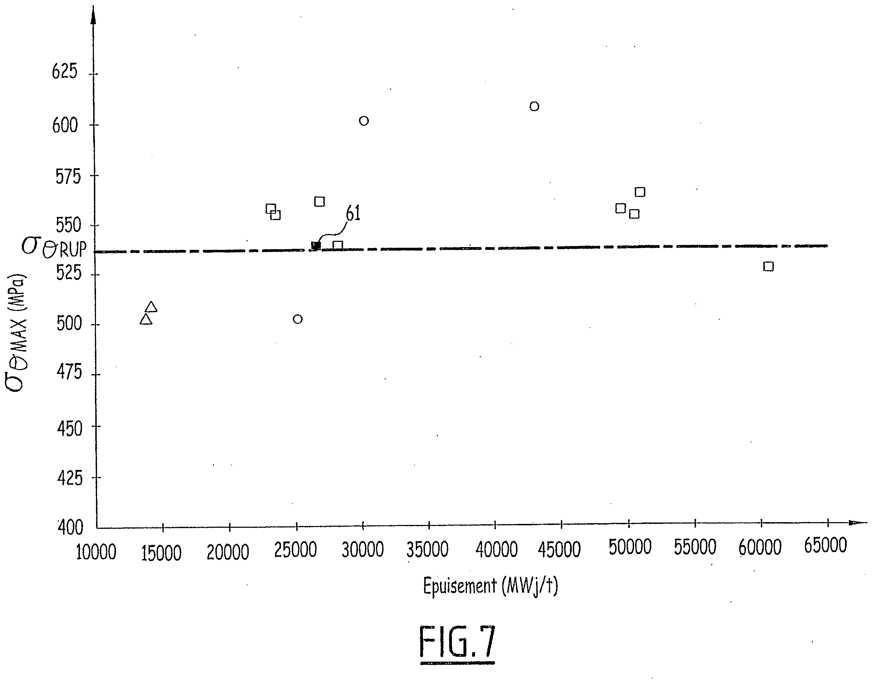

La figure 7 fait apparaître les valeurs σ_{θMAX} ainsi calculées pour l'ensemble des tronçons de crayons 24 qui correspondent chacun à un épuisement différent.

Sur la figure 7, la contrainte est portée en ordonnée et l'épuisement en abscisse.

La valeur de rupture retenue sera inférieure ou égale au minimum parmi les valeurs σ_{θMAX} pour lesquelles une rupture de gaine 33 est effectivement intervenue.

Dans l'exemple de la figure 7, une seule rupture est intervenue sur un crayon 24 qui est repéré par le carré plein 61.

Ainsi, la valeur de rupture σ_{θRUP} retenue pour la suite du procédé est d'environ 535 MPa.

Ensuite, et comme schématisé par le bloc 62 sur la figure 5, on engendre les historiques de puissance pour chaque crayon 24 présent dans le coeur 2.

En effet, l'état thermomécanique local d'un crayon 24 dépend de cet historique. Il peut donc être utile de connaître l'historique de la puissance fournie par chaque crayon 24 depuis son introduction dans le coeur 2 jusqu'au moment d'un accident que l'on va simuler.

Ces historiques peuvent être établis avec un logiciel de modélisation du comportement neutronique des crayons 24, désigné par la référence numérique 63 sur la figure 5 et stocké dans les moyens 44. Un tel logiciel peut être un logiciel classique fondé sur les éléments finis.

Les historiques de fonctionnement relatifs à chaque crayon 24 sont générés pour différents modes de fonctionnement du coeur 2, à savoir :
- le fonctionnement en base où la puissance globale P du coeur 2 est égale à sa puissance nominale PN,
- le fonctionnement à puissance réduite avec les grappes de contrôle 20 insérées dans les assemblages combustibles 16,
- le fonctionnement à puissance réduite avec les grappes de contrôle 20 extraites des assemblages combustibles 16.

Les historiques peuvent être générés en prenant en compte différents niveaux de puissance réduite, par exemple 10% PN, 30% PN, 50% PN...

La simulation des conditions initiales d'un accident de catégorie 2, illustrée par le bloc 64 sur la figure 5, est effectuée grâce au logiciel 63 et par exemple à l'aide d'un autre logiciel 65 de simulation du comportement de l'ensemble du réacteur 1. Il peut s'agir d'un logiciel classique incluant notamment une prise en compte des régulations d'un système de protection du réacteur 1.

Les conditions simulées lors de l'étape 64 correspondent à une situation dite de catégorie 1.

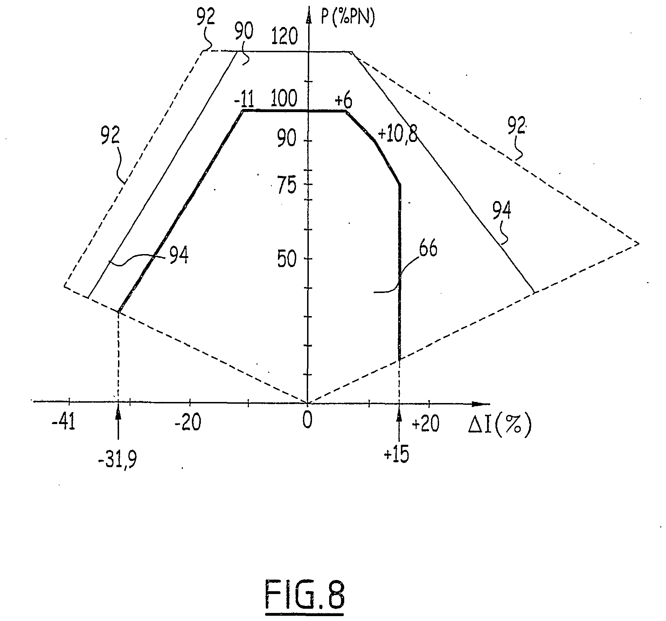

Une telle situation est située dans le domaine 66 du diagramme de la figure 8 ou le pourcentage de la puissance globale P du réacteur 1 par rapport à sa puissance nominale PN est portée en ordonnée et l'écart de puissance Δl entre la partie haute et la partie basse du coeur 2 est portée en abscisse.

Les conditions initiales dans le plan P/Δl sont choisies de manière à maximiser l'accroissement de la puissance locale en cas de transitoire de puissance dans le coeur 2.

Ces conditions initiales sont obtenues par des oscillations xénon, générées par des variations instantanées de puissance globale P du réacteur 2 combinée à des mouvements de grappes de contrôle 20, conduisant à des distributions de puissance pénalisantes dans le coeur 2.

Ainsi, les conditions initiales peuvent être caractérisées par :
- le taux d'épuisement dans les crayons 24,
- la puissance globale P fournie par le coeur 2,
- la distribution axiale de puissance dans le coeur 2,
- la distribution axiale de xénon,
- la position des grappes de contrôle 20, et
- la concentration en bore dans l'eau du circuit primaire 8.

Après l'étape schématisée par le bloc 64, on simule, comme schématisé par le bloc 67, des transitoires accidentels de fonctionnement du réacteur 1 qui induisent des variations brusques de puissance. Ces transitoires sont simulés par exemple grâce aux logiciels 63 et 65. Les transitoires accidentels sont simulés à partir des conditions initiales déterminées à l'étape 64, à plusieurs instants dans chaque cycle.

Les transitoires simulés sont les transitoires accidentels dits de catégorie 2 induisant les variations de puissance les plus fortes et les plus rapides dans le coeur 2.

Ces transitoires sont les suivants :
- l'augmentation excessive de charge,
- le retrait incontrôlé de groupes de grappes de contrôle 20, alors que le réacteur 1 est en puissance,
- la chute de grappe(s) 20.

L'augmentation excessive de charge correspond à une augmentation rapide du débit de vapeur dans le générateur de vapeur 3. Une telle augmentation entraîne un déséquilibre entre la puissance thermique du coeur 2 et la charge du générateur de vapeur 3. Ce déséquilibre conduit à un refroidissement du circuit primaire 8. Du fait de l'effet modérateur et/ou de la régulation de la température moyenne dans le coeur 2 par les grappes de contrôle 20, la réactivité, et donc le flux nucléaire, augmentent dans le coeur 2. Ainsi, la puissance globale P fournie par le coeur 2 augmente rapidement.

Pour simuler ce transitoire, on considère que le débit de vapeur dans le générateur 3 augmente de sa valeur initiale jusqu'à la valeur maximale autorisée par les caractéristiques du circuit secondaire 12. Cette augmentation est par ailleurs suffisamment lente pour les niveaux de puissance étudiés afin d'éviter l'arrêt automatique du réacteur par basse pression du pressuriseur 10.

Le retrait incontrôlé de groupes de grappes de contrôle 20 alors que le réacteur fonctionne provoque une augmentation incontrôlée de la réactivité. Il en résulte une augmentation rapide de la puissance nucléaire globale P et du flux de chaleur dans le coeur 2. Jusqu'à l'ouverture d'une vanne de décharge ou d'une soupape de sûreté du circuit secondaire 12, l'extraction de chaleur dans le générateur de vapeur 3 augmente moins vite que la puissance dégagée dans le circuit primaire 8. Il en résulte un accroissement de la température et de la pression de l'eau du circuit primaire 8. Pour simuler ce transitoire, on suppose un retrait des groupes de puissance à la vitesse maximale de 72 pas/mn jusqu'à l'extraction totale.

Si une ou plusieurs des grappes de contrôle 20 chute dans le coeur, il en résulte une réduction immédiate de la réactivité et de la puissance globale P dans le coeur 2. En l'absence d'action protectrice, le déséquilibre ainsi induit entre le circuit primaire 8 et le circuit secondaire 12 entraîne une diminution de la température d'entrée de l'eau dans le coeur 2, ainsi qu'une augmentation de la puissance neutronique par les contre-réactions et la régulation de température, jusqu'à l'atteinte d'un nouvel équilibre entre le circuit primaire 8 et le circuit secondaire 12. La présence de la ou des grappes de contrôle 20 ayant chutée provoque une déformation de la distribution radiale de puissance, tandis que le retrait du groupe de régulation conduit à une modification axiale de la puissance.

On a constaté que d'autres transitoires accidentels de puissance n'avaient pas besoin d'être simulés puisqu'ils s'avéraient moins pénalisants que ceux cités précédemment. C'est notamment le cas de l'accident de dilution.

Après détermination des historiques de puissance et simulation des transitoires accidentels, on va calculer à l'étape 68, la valeur de la grandeur physique σ_{θ} atteinte dans les crayons 24 au cours des transitoires simulés à l'étape 67. Cette étape 68 utilise les résultats des étapes 62 et 67. En fait, cette étape 68 va comprendre, pour chaque transitoire, une première sous-étape où ce calcul va être effectué grossièrement pour chacun des crayons 24. Ce calcul grossier peut être effectué grâce au logiciel 60. En variante, ce calcul peut n'être effectué que pour 1/8^{ème} des crayons 24 pour des raisons de symétrie du coeur 2.

On va alors déterminer dans quel crayon 24 la valeur la plus élevée de la grandeur physique σ_{θ} sera atteinte. Il s'agira donc du crayon 24 dont la gaine 33 est la plus sollicitée, ou crayon limitant. En variante, on peut sélectionner plusieurs crayons limitants.

Une fois le crayon 24 limitant ainsi déterminé, on va calculer de manière précise dans une deuxième sous-étape, pour ce seul crayon 24, la valeur maximale de la grandeur physique σ_{θ} atteinte dans sa gaine 33. Ce calcul précis peut être effectué par le logiciel 60.

Ensuite, et comme schématisé par le bloc 70, on va pouvoir déterminer par comparaison de la valeur maximale calculée à l'étape 68 avec la valeur de rupture σ_{θRUP} déterminée à l'étape 50 si un risque de rupture de gaine 33 est encouru lors d'un transitoire accidentel.

Ainsi, on va pouvoir déterminer au cours de l'étape 70 quelles sont les valeurs de paramètres de fonctionnement du coeur 2 au moment d'une rupture de gaine 33 lors des transitoires accidentels simulés. Ces valeurs déterminées seront alors les valeurs limites des paramètres de fonctionnement qu'un exploitant du réacteur 1 devra respecter.

Un tel paramètre de fonctionnement peut être par exemple la puissance linéique PLIN dans les crayons 24. La valeur limite du paramètre ainsi déterminée peut être utilisée pour piloter le réacteur 1 et notamment pour établir des seuils d'arrêt d'urgence ou d'alarme.

En effet, le seuil d'arrêt d'urgence peut être par exemple égal à la valeur de PLIN déterminée lors de l'étape 70 et les seuils d'alarme correspondent à cette valeur limite minorée par exemple d'un certain pourcentage.

Dans des modes particuliers de mise en oeuvre du procédé, on prend en compte lors des étapes 64 et 67, les modes de fonctionnement suivants du réacteur 1 :
- fonctionnement de base, le réacteur 1 fonctionnant à sa puissance globale nominale PN,
- fonctionnement prolongé à puissance globale intermédiaire PI,
- le retour au fonctionnement de base après fonctionnement prolongé à puissance globale intermédiaire PI,
- le fonctionnement en suivi de réseau,
- le fonctionnement en réglage primaire,
- le fonctionnement en téléréglage.

La simulation d'un transitoire accidentel lors du fonctionnement de base correspond, pour chaque crayon 24, à la simulation d'une rampe de puissance telle que celle représentée sur la figure 6.

Le fonctionnement prolongé à puissance intermédiaire est défini comme étant le fonctionnement du réacteur 1 en régime permanent, à une puissance globale PI inférieure ou égale à environ 92% de sa puissance nominale PN sur une durée de plus de 8 h par plage de 24 h.

Un tel fonctionnement a pour effet de déconditionner les pastilles 36 dans les crayons 24.

En effet, si localement la puissance diminue, il en résulte une diminution de température dans les pastilles 36 et dans la gaine 33, qui entraîne une diminution des dilatations thermiques de ces éléments. Chaque pastille 36 possède un coefficient de dilatation thermique plus important que celui de la gaine 33 et rétrocède donc une dilatation absolue plus importante.

Ce phénomène est en outre accentué par le fait que pour une baisse de puissance locale donnée, la variation de température dans chaque pastille 36 est plus importante que celle dans la gaine 33.

Pour les crayons 24 où le contact entre la gaine 33 et les pastilles 36 n'est pas établi, le jeu radial J s'agrandit. En ce qui concerne les crayons 24 où le jeu J était fermé, le jeu J se réouvre.

En cas de réouverture du jeu J, il y a fluage en compression de la gaine 33 par effet de pression. Il en résulte une augmentation de la contrainte σ_{θ} dans la gaine 33 quand survient le transitoire accidentel.

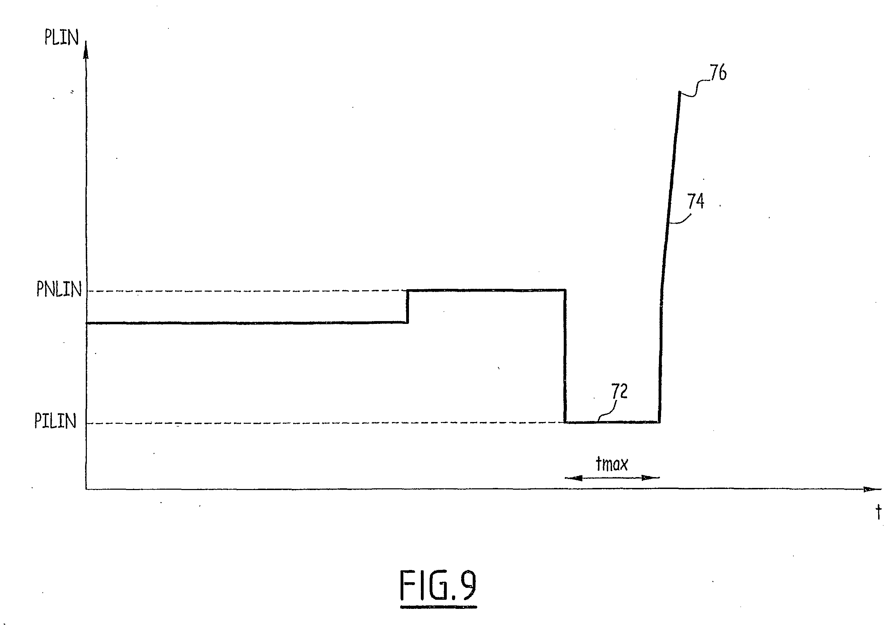

La figure 9 illustre, pour un crayon 24, la simulation d'un transitoire accidentel lors d'un tel fonctionnement. La puissance linéïque PLIN dans le crayon 24 y est portée en ordonnée et le temps t en abscisse.

Le tronçon 72 de la courbe correspond au fonctionnement prolongé à puissance intermédiaire. La puissance linéïque PILIN dans le crayon 24 est alors inférieure à la puissance linéïque nominale PNLIN correspondant à la puissance globale nominale PN. Le transitoire, qui correspond à une rampe de puissance, est schématisé par le tronçon 74 de cette même courbe. Ce transitoire se termine par une rupture de la gaine 33 au point 76.

La simulation du fonctionnement prolongé à puissance intermédiaire peut être effectuée pour plusieurs valeurs de puissance intermédiaire PILIN afin de couvrir diverses situations susceptibles d'être rencontrées lors de l'exploitation du réacteur 1.

En outre, cette simulation peut être effectuée pour déterminer la durée maximale autorisée tmax de ce mode de fonctionnement pour que le transitoire 74 suivant le palier 72 n'induise pas de rupture de gaine 33.

Pour cela, on simule des paliers 72 de durée croissante jusqu'à atteindre la valeur de rupture de la grandeur physique sélectionnée. La durée tmax est la durée du palier 72 pour lequel la valeur de rupture est atteinte.

Le retour au fonctionnement de base après fonctionnement prolongé à puissance intermédiaire mérite d'être étudié vis-à-vis des interactions pastilles/gaines pour la raison suivante.

Si la puissance locale augmente, il en résulte une augmentation des températures dans les pastilles 36 et dans la gaine 33 d'un crayon 24. Le coefficient de dilatation thermique de chaque pastille 36 étant plus important que celui de la gaine 33, la pastille 36 impose sa déformation à la gaine 33 en y engendrant des contraintes relativement élevées. Il se produit donc un reconditionnement du combustible.

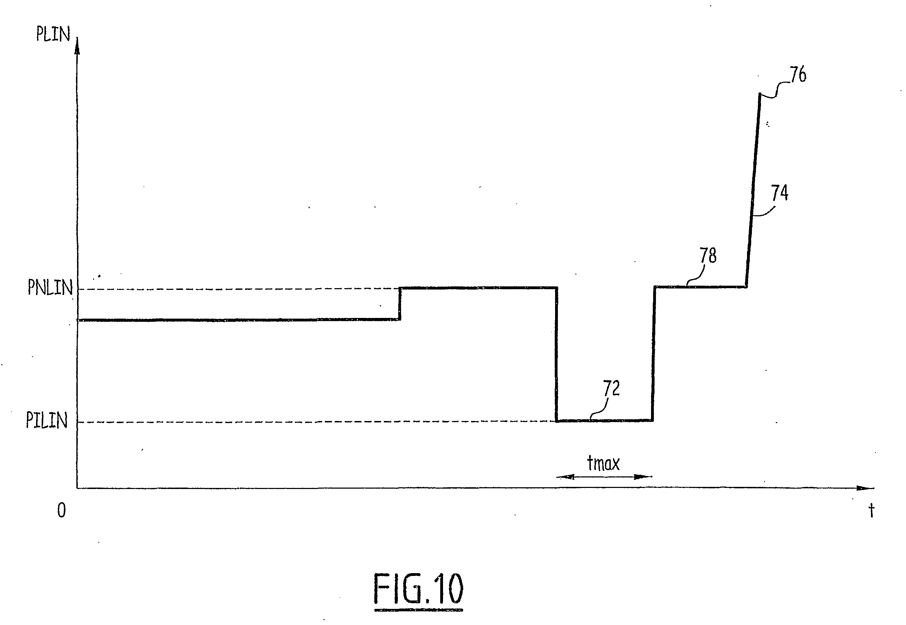

Un tel fonctionnement est illustré par la courbe de la figure 10 où le palier 72 à la puissance linéïque PILIN est suivi d'un palier 78 à la valeur nominale PNLIN.

Pour la simulation du retour au fonctionnement de base, le palier 72 de la figure 10 dure de préférence la durée tmax.

Le fonctionnement en suivi de réseau est un fonctionnement dans lequel le réacteur 1 fonctionne alternativement autour d'une puissance globale réduite PR et au voisinage de sa puissance nominale globale PN. La puissance réduite peut être par exemple d'environ 30 ou 50% de PN. Par exemple, la durée de fonctionnement autour de la puissance réduite peut être de 8 h et celle au voisinage de la puissance maximale PN de 16 h pour une période de 24 h. La puissance globale P peut varier dans chaque phase autour de la valeur de référence correspondante PR ou PN pour s'adapter aux besoins en énergie électrique du réseau alimenté par le générateur 5. Lorsque la valeur de référence est PN, les variations de puissance ne sont que négatives.

La simulation du fonctionnement dans ce mode peut être effectuée à partir du fonctionnement de base.

Dans ce cas, on utilise comme valeur de rupture la valeur calculée précédemment diminuée d'une valeur corrective. Cette valeur corrective peut être typiquement de l'ordre de 20 MPa lorsque la grandeur physique considérée σ_{θ} est une contrainte ou une différence de contraintes.

Pour déterminer la valeur corrective on peut utiliser le logiciel 60. On simule alors grossièrement des transitoires en fonctionnement de base et des transitoires en fonctionnement en suivi de réseau.

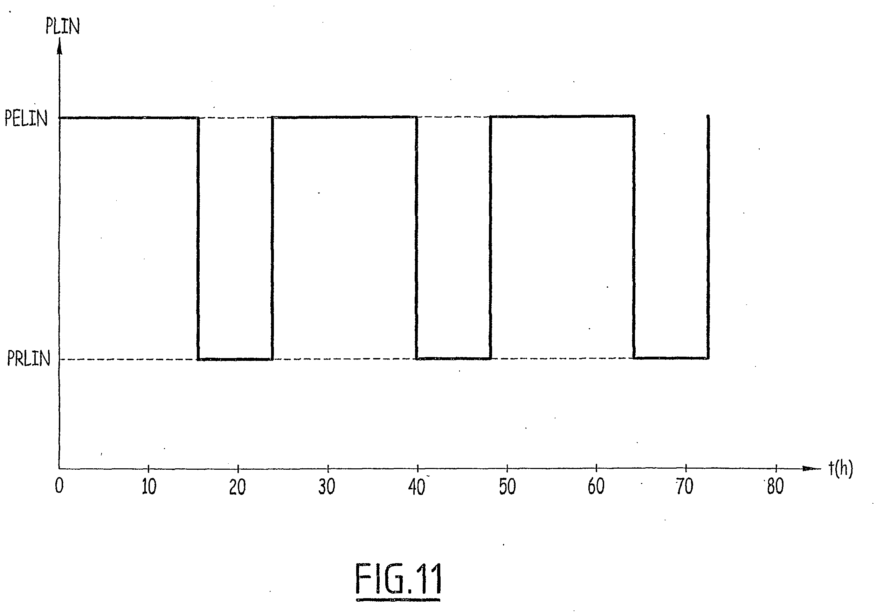

Pour simplifier les calculs, on peut modéliser le fonctionnement en suivi de réseau selon la courbe de la figure 11 où la puissance linéique PLIN est portée en ordonnée et le temps t est porté en abscisse. Les oscillations autour des valeurs haute et basse ne sont pas représentées. Pour les prendre en compte on effectue plusieurs simulations avec des puissances réduites PRLIN et des puissances élevées PELIN dans les plages de variation. La différence entre les valeurs maximales de σ_{θ} calculées par le logiciel 60 pour les deux modes de fonctionnement constitue alors la valeur corrective.

Dans le mode de fonctionnement en réglage primaire, la puissance globale P oscille autour d'une valeur de référence de l'ordre de 98% de PN. Les variations autour de cette valeur de référence peuvent être de plus 2% et de moins 3% de PN.

Dans le mode de fonctionnement en téléréglage, la puissance globale P oscille autour d'une valeur de référence de l'ordre de 92% de PN. Les variations autour de cette valeur de référence peuvent être de plus 8% et de moins 7% de PN.

De même que pour le fonctionnement en suivi de réseau, le fonctionnement en réglage primaire et le fonctionnement en téléréglage peuvent être simulés à partir du fonctionnement de base, la valeur de la grandeur physique caractérisant la rupture étant à nouveau affectée d'un biais.

Ainsi, on n'effectue qu'un seul calcul en fonctionnement de base et l'on utilise une valeur de rupture corrigée pour prendre en compte le fonctionnement de base, le fonctionnement en suivi de réseau, le fonctionnement en réglage primaire et le fonctionnement en téléréglage.

Dans un mode de réalisation plus simple, on peut ne tenir compte que du fonctionnement de base.

La simulation du mode de fonctionnement de base, ou les différentes simulations des modes de fonctionnement, peuvent être effectuées pour chaque configuration respective des groupes de grappes de contrôle 20, à différents taux d'épuisement des crayons 24.

On dispose ainsi par exemple d'une valeur limite de puissance linéique PLIN pour chaque configuration de grappes de contrôle 20 et par taux d'épuisement.

Outre ces valeurs limites que l'on va utiliser comme seuils d'arrêt automatique du réacteur 2, l'étape 70 de la figure 5 permet également d'établir des seuils à partir desquels d'autres actions que l'arrêt du réacteur 2 vont être automatiquement déclenchées. Il s'agit par exemple d'un seuil dit C4, qui correspond aux valeurs du seuil d'arrêt d'urgence minorées de 3%, et à partir desquelles la charge de la turbine 4 sera automatiquement limitée.

Il peut également s'agir d'un seuil d'alarme qui peut être réglé aux valeurs du seuil C4 minorées de 3%.

Le procédé ainsi mis en oeuvre peut conduire à une limitation des domaines d'exploitation représentés sur la figure 8.

Sur cette figure, la référence numérique 90 désigne le domaine correspondant aux situations de fonctionnement de catégorie 2. Ce domaine est situé autour du domaine 66. Les références numériques 92 désignent des frontières (en pointillés) de ce domaine telles qu'elles étaient établies avant l'utilisation du procédé selon l'invention.

La mise en oeuvre du procédé de l'invention conduit à redéfinir certaines de ces frontières 92. Les nouvelles frontières 94 sont représentées en trait plein sur la figure 8. Comme on peut le constater, le domaine 90 redéfini à partir du procédé de l'invention est donc plus étroit. Les frontières 94, qui correspondent aux seuils d'arrêt d'urgence, sont donc plus pénalisantes que celles utilisées jusqu'à présent. Le fonctionnement du réacteur 1 utilisant les paramètres limites obtenus grâce au procédé est donc plus sûr.

On notera que chaque tronçon de droite des frontières 94 correspond à des couples de valeurs limites de P et de Δl.

La durée tmax déterminée constitue également une valeur limite d'un paramètre de fonctionnement déterminée grâce au procédé. Cette valeur permet à un exploitant d'augmenter la durée de fonctionnement à puissance réduite et donc d'exploiter au mieux les capacités du réacteur 2 en réduisant les risques d'endommagement des crayons 24.

Ainsi, le procédé décrit permet de vérifier les valeurs limites de paramètres de fonctionnement et les procédures de sûreté, de modifier les valeurs limites de paramètres de fonctionnement du réacteur 1 si nécessaire et de convertir d'anciennes limites trop étroites en marge d'exploitation. Ainsi, il est possible d'assurer un fonctionnement sûr de ce dernier tout en exploitant mieux ses capacités.

De manière générale, l'étape 50 pourra être mise en oeuvre séparément du reste du procédé de détermination de valeurs limites de paramètres du fonctionnement du réacteur 2.

De manière générale également, les différentes étapes de ce procédé peuvent être mises en oeuvre par un seul et même logiciel mémorisé dans les moyens 44.

Les principes ci-dessus peuvent s'appliquer à d'autres types de réacteur que les réacteurs à eau pressurisée, par exemple aux réacteurs à eau bouillante.

## Revendications

1. Procédé de détermination par un système informatique d'au moins une valeur limite (tmax) d'au moins un premier paramètre (t, PLIN, P, Δl) de fonctionnement d'un réacteur nucléaire (1) comprenant un coeur (2) dans lequel des assemblages combustibles (16) sont chargés, les assemblages combustibles (16) comprenant des crayons combustibles (24) comportant chacun des pastilles (36) de combustible nucléaire et une gaine (33) entourant les pastilles (36), **caractérisé en ce qu'**il comprend les étapes de :
b) simuler au moins un transitoire de fonctionnement du réacteur nucléaire (2),
c) calculer la valeur atteinte par une grandeur physique (σ_{θ}) au cours du transitoire de fonctionnement dans au moins une gaine (33) d'un crayon combustible (24), et
d) déterminer, en tant que valeur limite, la valeur du premier paramètre de fonctionnement au moment où la valeur calculée à l'étape c) correspond à une valeur (σ_{θRUP}) de la grandeur physique caractérisant une rupture de la gaine (33).

2. Procédé selon la revendication 1, **caractérisé en ce qu'**il comprend avant l'étape b) une étape de :
a) détermination d'une valeur de rupture (σ_{θRUP}) de la grandeur physique caractérisant une rupture de la gaine (33).

3. Procédé selon la revendication 2, **caractérisé en ce que** l'étape a) comprend les sous-étapes de :
a1) soumettre des crayons combustibles (24) à des rampes de puissance nucléaire,
a2) calculer les valeurs atteintes (σ_{θMAX}) par la grandeur physique (σ_{θ}) dans au moins une gaine (33) rompue lors d'une rampe de puissance,
a3) sélectionner la valeur minimale parmi les valeurs atteintes calculées à l'étape a2).

4. Procédé selon la revendication 3, **caractérisé en ce que** la valeur de rupture utilisée à l'étape d) est égale à la valeur minimale sélectionnée à l'étape a3).

5. Procédé selon la revendication 3, **caractérisé en ce que** la valeur de rupture utilisée à l'étape d) est égale à la valeur minimale sélectionnée à l'étape a3) et corrigée par un facteur représentatif d'un mode de fonctionnement du réacteur.

6. Procédé selon l'une des revendications précédentes, **caractérisé en ce qu'**il comprend avant l'étape c) une étape de :
b') détermination d'au moins un crayon combustible (24) dont la gaine (33) est la plus sollicitée lors du transitoire simulé à l'étape b),
et **en ce que** l'étape c) est effectuée pour le ou chaque crayon (24) déterminé à l'étape b').

7. Procédé selon la revendication 6, **caractérisé en ce que** l'étape b') comprend les sous-étapes de :
b'1) évaluation de la valeur atteinte par la grandeur physique (σ_{θ}) dans les gaines (33) de plusieurs crayons combustibles (24), et
b'2) sélection, en tant que crayon dont la gaine (33) est la plus sollicitée, du crayon (24) dont la valeur évaluée à l'étape b'1) est la plus élevée.

8. Procédé selon l'une des revendications précédentes, **caractérisé en ce que** le premier paramètre de fonctionnement est la puissance linéique (PLIN) fournie par un crayon combustible (24).

9. Procédé selon l'une des revendications 1 à 7, **caractérisé en ce que** le premier paramètre de fonctionnement est une durée (t) de fonctionnement du réacteur (1) à une puissance intermédiaire inférieure à sa puissance nominale (PN).

10. Procédé selon l'une des revendications précédentes, **caractérisé en ce que** la valeur limite est une valeur limite de déclenchement d'un arrêt d'urgence du réacteur (1).

11. Procédé selon la revendication 10, **caractérisé en ce qu'**il comprend en outre au moins une étape de :
e) détermination d'une valeur limite de déclenchement d'une alarme à partir de la valeur limite d'arrêt d'urgence déterminée à l'étape d).

12. Procédé selon l'une des revendications précédentes, **caractérisé en ce que** l'étape b) est mise en oeuvre pour au moins un mode de fonctionnement du réacteur (1) choisi dans le groupe constitué par :
- un mode de fonctionnement à puissance globale du réacteur (1) égale à sa puissance nominale,
- un mode de fonctionnement prolongé à puissance intermédiaire où la puissance globale du réacteur (1) est inférieure à sa puissance nominale sur une durée d'au moins 8 h pour une plage de 24 h,
- un mode de fonctionnement en suivi de réseau où la puissance globale varie alternativement autour d'une puissance élevée (PN ; PE) et autour d'une puissance réduite (PR),
- un mode de fonctionnement en réglage primaire où la puissance globale du réacteur (1) varie de 0 à 5% autour d'une valeur de référence comprise entre 95 et 100% de la puissance globale nominale du réacteur (2).

13. Procédé selon la revendication 12, **caractérisé en ce que**, pour au moins un mode de fonctionnement, on utilise les étapes b) à d) d'un autre mode de fonctionnement avec, comme valeur de rupture de la grandeur physique, la valeur de rupture de cet autre mode de fonctionnement corrigé d'une valeur corrective.

14. Procédé selon l'une des revendications précédentes, **caractérisé en ce que** le transitoire simulé à l'étape b) est un transitoire choisi dans le groupe consistant en :
- une augmentation excessive de charge,
- un retrait incontrôlé d'au moins un groupe de grappes de contrôle (20),
- une chute de l'une des grappes de contrôle (20).

15. Procédé selon l'une des revendications précédentes, **caractérisé en ce que** la grandeur physique est une contrainte ou une fonction de contrainte(s) dans la gaine (33).

16. Procédé selon l'une des revendications précédentes, **caractérisé en ce que** la grandeur physique est une densité d'énergie de déformation dans la gaine (33).

17. Système informatique (40) de détermination d'au moins une valeur limite d'un paramètre de fonctionnement d'un réacteur nucléaire (2), **caractérisé en ce qu'**il comprend des moyens (42, 44, 46, 48) de mise en oeuvre des étapes d'un procédé selon l'une quelconque des revendications précédentes.

18. Système selon la revendication 17, **caractérisé en ce qu'**il comprend au moins un ordinateur (42) et des moyens (44) de stockage dans lesquels sont stockés au moins un programme pour l'exécution d'étapes du procédé de détermination mis en oeuvre par le système.

19. Programme d'ordinateur comprenant des instructions pour l'exécution des étapes d'un procédé selon l'une quelconque des revendications 1 à 16.

20. Support utilisable dans un ordinateur et sur lequel est enregistré un programme selon la revendication 19.

## Patentansprüche

1. Verfahren zur Ermittlung, mittels eines Informatik-Systems, wenigstens eines Grenzwerts (tmax) wenigstens eines ersten Funktions-Parameters (t, PLIN, P, Δl) eines Kernreaktors (1), der einen Kern (2) aufweist, in welchem Brennstabanordnungen (16) geladen sind, wobei die Brennstabanordnungen (16) Brennstäbe (24) aufweisen, welche jeder Kernbrenntabletten (36) und ein die Tabletten (36) umgebendes Hüllrohr (33) aufweisen, **dadurch gekennzeichnet, dass** es die Schritte aufweist:
b) Simulieren wenigstens eines Funktions-Übergangs des Kernreaktors (2),
c) Berechnen des Störungswertes durch eine physikalische Größe (σ_{θ}) im Verlauf des Funktions-Übergangs in wenigstens einem Hüllrohr (33) eines Brennstabs (24), und
d) Ermitteln als Grenzwert den Wert des ersten Funktionsparameters in dem Moment, in dem der im Schritt c) berechnete Wert einem Wert (σ_{θRUP}) der physikalischen Größe entspricht, der ein Reißen des Hüllrohrs (33) kennzeichnet.

2. Verfahren gemäß Anspruch 1, **dadurch gekennzeichnet, dass** es vor dem Schritt b) aufweist einen Schritt :
a) Ermitteln eines Reißen-Werts (σ_{θRUP}) der physikalischen Größe, der ein Reißen des Hüllrohrs (33) kennzeichnet.

3. Verfahren gemäß Anspruch 2, **dadurch gekennzeichnet, dass** der Schritt a) die Unterschritte aufweist:
a1) die Brennstäbe (24) Nuklearleistungsanstiegen Aussetzen,
a2) Berechnen der Grenzwerte (σ_{θMAX}) durch die physikalische Größe (σ_{θ}) in wenigstens einem Hüllrohr (33), das anlässlich eines Leistungsanstiegs gerissen ist,
a3) Auswählen des kleinsten Werts unter den Grenzwerten, die im Schritt a2) berechnet wurden.

4. Verfahren gemäß Anspruch 3, **dadurch gekennzeichnet, dass** der Reißen-Wert, der im Schritt (d) verwendet wird, gleich dem kleinsten Wert ist, der im Schritt a3) ausgewählt wurde.

5. Verfahren gemäß Anspruch 3, **dadurch gekennzeichnet**, das der Reißen-Wert, der im Schritt d) verwendet wird, gleich dem kleinsten Wert ist, der im Schritt a3) ausgewählt und durch einen Faktor korrigiert wurde, der repräsentativ ist für einen Funktionsmodus des Reaktors.

6. Verfahren gemäß einem der vorhergehenden Ansprüche, **dadurch gekennzeichnet, dass** es aufweist vor dem Schritt c) einen Schritt:
b') Ermitteln wenigstens eines Brennstabs (24), dessen Hüllrohr (33) das am meisten Beanspruchte ist während des im Schritt b) simulierten Übergangs,
und dass der Schritt c) für den oder jeden im Schritt b') ermittelten Brennstab (24) durchgeführt wird.

7. Verfahren gemäß Anspruch 6, **dadurch gekennzeichnet, dass** der Schritt b') aufweist die Unterschritte:
b'1) Evaluieren des Grenzwertes durch die physikalische Größe (σ_{θ}) in den Hüllrohren (33) von mehreren Brennstäben (24), und
b'2) Auswählen als Stab, dessen Hüllrohr (33) das am meisten Beanspruchte ist, den Stab (24), dessen im Schritt b'1) evaluierter Wert der höchste ist.

8. Verfahren gemäß einem der vorhergehenden Ansprüche, **dadurch gekennzeichnet, dass** der erste Funktionsparameter die Linearleistung (PLIN) ist, die von einem Brennstab (24) geliefert wird.

9. Verfahren gemäß einem der Ansprüche 1 bis 7, **dadurch gekennzeichnet, dass** der erste Funktionsparameter eine Funktions-Dauer (t) des Reaktors (1) bei einer Zwischenleistung ist, die kleiner ist als dessen nominale Leistung.

10. Verfahren gemäß einem der vorhergehenden Ansprüche, **dadurch gekennzeichnet, dass** der Grenzwert ein Grenzwert des Auslösens eines Notstopps des Reaktors (1) ist.

11. Verfahren gemäß Anspruch 10, **dadurch gekennzeichnet, dass** es ferner aufweist einen Schritt:
e) Ermitteln eines Grenzwerts des Auslösens eines Alarms ausgehend von dem im Schritt d) ermittelten Grenzwert eines Notstopps.

12. Verfahren gemäß einem der vorhergehenden Ansprüche, **dadurch gekennzeichnet, dass** der Schritt b) für wenigstens einen Funktionsmodus des Reaktors (1) umgesetzt wird, der aus der Gruppe ausgewählt ist, die gebildet ist von:
- einem Funktionsmodus bei Gesamtleistung des Reaktors (1), die gleich dessen nominaler Leistung ist,
- einem Langzeit-Funktionsmodus bei Zwischenleistung, wobei die Gesamtleistung des Reaktors (1) kleiner ist als dessen nominale Leistung für eine Dauer von wenigstens 8h für einen Zeitbereich von 24h,
- einem Funktionsmodus zur Stromnetznachverfolgung, wobei die Gesamtleistung des Reaktors (1) variiert alternativ um eine erhöhte Leistung (PN; PE) herum oder um reduzierte Leistung (PR) herum,
- einem Funktionsmodus zur Primärregelung, wobei die Gesamtleistung des Reaktors (1) variiert um 0 bis 5% um einen Referenzwert herum, der zwischen 95% und 100% der nominalen Gesamtleistung des Reaktors (2) beträgt.

13. Verfahren gemäß Anspruch 12, **dadurch gekennzeichnet, dass** man für wenigstens einen Funktionsmodus die Schritte b) bis d) eines anderen Funktionsmodus mit dem Reißen-Wert dieses anderen Funktionsmodus, korrigiert mit einem Korrekturwert, als den Reißen-Wert der physikalischen Größe verwendet.

14. Verfahren gemäß einem der vorhergehenden Ansprüche, **dadurch gekennzeichnet, dass** der in Schritt b) simulierte Übergang ein Übergang ist, der ausgewählt ist aus der Gruppe, die besteht aus:
- einer exzessiven Erhöhung der Last,
- einem unkontrollierten Rückfahren wenigstens einer Gruppe von Steuerstäben (20),
- einem Herunterfallen eines der Steuerstäbe (20).

15. Verfahren gemäß einem der vorhergehenden Ansprüche, **dadurch gekennzeichnet, dass** die physikalische Größe eine mechanische Spannung oder eine Funktion einer(von) mechanischen Spannung(en) in dem Hüllrohr (33) ist.

16. Verfahren gemäß einem der vorhergehenden Ansprüche, **dadurch gekennzeichnet, dass** die physikalische Größe eine Energiedichte von Deformation in dem Hüllrohr (33) ist.

17. Informatik-System (40) zur Ermittlung wenigstens eines Grenzwerts eines Funktionsparameters eines Kernreaktors (2), **dadurch gekennzeichnet, dass** es aufweist Mittel (42, 44, 46, 48) zur Umsetzung der Schritte eines Verfahrens gemäß irgendeinem der vorhergehenden Ansprüche.

18. System gemäß Anspruch 17, **dadurch gekennzeichnet, dass** es aufweist wenigstens einen Rechner (42) und Speichermittel (44), in welchen wenigstens ein Programm zur Durchführung der Schritte des mittels des Systems umgesetzten Verfahrens zur Ermittlung gespeichert ist.

19. Computerprogramm, aufweisend Instruktionen zur Durchführung der Schritte eines Verfahrens gemäß irgendeinem der Ansprüche 1 bis 16.

20. Support, der in einem Rechner verwendbar ist und auf dem ein Programm gemäß Anspruch 19 gespeichert ist.

## Claims

1. Method for establishing by a computer system at least one limit value (tmax) for at least one first operational parameter (t, PLIN, P, Δl) of a nuclear reactor (1) comprising a core (2), in which fuel assemblies (16) are loaded, the fuel assemblies (16) comprising fuel rods (24) each comprising pellets (36) of nuclear fuel and a cladding (33) which surrounds the pellets (36), **characterized in that** it comprises the steps of:
b) simulating at least one transient operational occurrence of the nuclear reactor (2),
c) calculating the value reached by a physical quantity (σ_{θ}) during the transient operational occurrence in at least one cladding (33) of a fuel rod (24) and
d) establishing, as a limit value, the value of the first operational parameter at the moment when the value calculated in step c) corresponds to a value (σ_{θRUP}) for the physical quantity which characterizes a failure of the cladding (33).

2. Method according to claim 1, **characterized in that** it comprises, before step b), a step for:
a) establishing a failure value (σ_{θRUP}) for the physical quantity which characterizes a failure of the cladding (33).

3. Method according to claim 2, **characterized in that** step a) comprises the subsidiary steps of:
a1) subjecting fuel rods (24) to gradients of nuclear power,
a2) calculating the values reached (σ_{θMAX}) by the physical quantity (σ_{θ}) in at least one cladding (33) which has failed during a power gradient,
a3) selecting the minimum value from the values reached which are calculated in step a2).

4. Method according to claim 3, **characterized in that** the failure value used in step d) is equal to the minimum value selected in step a3).

5. Method according to claim 3, **characterized in that** the failure value used in step d) is equal to the minimum value selected in step a3) and corrected by a factor which represents an operating mode of the reactor.

6. Method according to any one of the preceding claims, **characterized in that** it comprises, before step c), a step for:
b') establishing at least one fuel rod (24) whose cladding (33) is the most stressed during the transient occurrence simulated in step b),
and **in that** step c) is carried out for the or each rod (24) which is established in step b').

7. Method according to claim 6, **characterized in that** step b') comprises the subsidiary steps of:
b'1) evaluating the value reached by the physical quantity (σ_{θ}) in the claddings (33) of a plurality of fuel rods (24), and
b'2) selecting, as the rod whose cladding (33) is the most stressed, the rod (24) whose value evaluated in step b'1) is the highest.

8. Method according to any one of the preceding claims, **characterized in that** the first operational parameter is the power per unit length (PLIN) supplied by a fuel rod (24).

9. Method according to any one of claims 1 to 7, **characterized in that** the first operational parameter is a period of time (t) for operation of the reactor (1) at an intermediate power less than its nominal power (PN).

10. Method according to any one of the preceding claims, **characterized in that** the limit value is a limit value for triggering an emergency shutdown of the reactor (1).

11. Method according to claim 10, **characterized in that** it further comprises at least one step for:
e) establishing a limit value for triggering an alarm from the limit value for an emergency shutdown established in step d).

12. Method according to any one of the preceding claims, **characterized in that** step b) is carried out for at least one operating mode of the reactor (1) selected from the group constituted by:
- an operating mode at a total power of the reactor (1) equal to its nominal power,
- an extended operating mode at intermediate power, in which the total power of the reactor (1) is less than its nominal power over a period of time of at least 8 hours per period of 24 hours,
- a continuous network operating mode, in which the total power varies alternately around a high power (PN ; PE) and around a low power (PR),
- a primary control operating mode, in which the total power of the reactor (1) varies by from 0 to 5% around a reference value in the order of between 95 and 100% of the nominal total power of the reactor (2).

13. Method according to claim 12, **characterized in that**, for at least one operating mode, the steps b) to d) are used for another operating mode with, as the failure value of the physical quantity, the failure value of that other operating mode corrected by a corrective value.

14. Method according to any one of the preceding claims, **characterized in that** the transient occurrence simulated in step b) is a transient occurrence selected from the group comprising:
- an excessive increase in load,
- an uncontrolled removal of at least one group of control clusters (20),
- one of the control clusters (20) falling.

15. Method according to any one of the preceding claims, **characterized in that** the physical quantity is a stress or a function of stress(es) in the cladding (33).

16. Method according to any one of the preceding claims, **characterized in that** the physical quantity is a deformation energy density in the cladding (33).

17. System (40) for establishing at least one limit value for an operational parameter of a nuclear reactor (2), **characterized in that** it comprises means (42, 44, 46, 48) for carrying out the steps of a method according to any one of the preceding claims.

18. System according to claim 17, **characterized in that** it comprises at least one computer (42) and storage means (44), in which at least one program for carrying out steps of the establishing method carried out by the system are stored.

19. Computer program comprising instructions for carrying out the steps of a method according to any one of claims 1 to 16.

20. Medium which can be used in a computer and on which a program according to claim 19 is recorded.
